# EUROPÄISCHE PATENTSCHRIFT

(11) **EP 0 756 092 B1**
(45) Veröffentlichungstag und Bekanntmachung des Hinweises auf die Patenterteilung: **16.09.1998**
(21) Anmeldenummer: 96109373.9
(22) Anmeldetag: 12.06.1996
(51) Int. Cl.: F16B 13/02, F16B 13/14

(54) **Dübel**
Dowel
Cheville

(30) Priorität: 24.07.1995 DE 19526993
(43) Veröffentlichungstag der Anmeldung: 29.01.1997
(73) Patentinhaber: Tox-Dübel-Werk R.W. Heckhausen GmbH & Co. KG, D-78351 Bodman-Ludwigshafen (DE)
(72) Erfinder: Leible, Dieter, 78234 Engen-Bittelbrunn (DE)
(74) Vertreter: Koch, Günther, Dipl.-Ing.

(56) Entgegenhaltungen:
- EP-A- 0 182 038
- EP-A- 0 544 054
- CH-A- 635 907
- DE-A- 3 815 749

## Beschreibung

Die Erfindung betrifft einen Einpreßdübel aus Kunststoff, der einen massiven, vom Dübelkopf ausgehenden, Schaftabschnitt aufweist und der in ein gebohrtes Loch einschlagbar ist und wenigstens über einen Teil seines Schaftes am Umfang mit elastisch ausweichenden Spreizelementen versehen ist, die sich ohne Einführen eines zentralen Spreizelementes der Bohrlochwandung anlegen und die Auszugskraft erhöhen.

Derartige Einpreßdübel, die auch als Preßnägel bezeichnet werden (vgl. DE 38 15 749 A1), ermöglichen die Direktbefestigung von Gegenständen an Holz, Beton, Mauerwerk und anderen festen Baustoffen, ohne daß in den in ein Bohrloch eingeschlagenen Einpreßdübel ein Spreizelement in Gestalt einer Schraube eingedreht oder ein Spreiznagel eingeschlagen werden müßte. Die bisher bekannt gewordenen Einpreßdübel besitzen einen durchgehend massiven, zylindrischen Schaft, der in dem vom Dübelfuß ausgehenden Abschnitt mit Spreizelementen in Gestalt flacher, rechtwinklig vorstehender Ringscheiben ausgestattet ist, die sich beim Einschlagen in ein Bohrloch an der Bohrlochwandung abstützen und eine gewisse Widerhakenfunktion ausüben.

Der Erfindung liegt die Aufgabe zugrunde, die Auszugskraft derartiger Einpreßdübel zu vergrößern und ihre Einsatzmöglichkeit im Bauwesen zu erweitern, wobei auch eine Anwendung in Hohlblocksteinen oder Hohlziegeln möglich wird.

Gelöst wird die gestellte Aufgabe durch die im Kennzeichnungsteil des Patentanspruchs 1 angegebenen Merkmale.

Es ist aus der EP-A-0 182 038 bereits ein Dübel bekannt, der insgesamt als Hülse ausgebildet ist und von einer Zentralbohrung durchsetzt wird. Im Bereich von einander diametral gegenüberliegenden Längsschlitzen ist die Außenkontur mit in Umfangsrichtung sich erstreckenden, sägezahnartigen Rippen versehen, wobei in Umfangsrichtung benachbarte Rippen axial zueinander versetzt sind. Die zentrale Bohrung dient zum Eindrehen einer Schraube, die die beiden durch die Längsschlitze getrennten Dübelschafthälften gegen die Bohrlochwandung spreizt. Bei dem erfindungsgemäßen Einpreßdübel erstreckt sich jedoch ein ungeschlitzter Hülsenabschnitt nur über einen Teil des Schaftes, nämlich den in Einschlagrichtung innen liegenden Teil und dadurch daß der die Spreizzähne tragende Schaftabschnitt als ungeschlitzte Hülse ausgebildet ist, können sich die als Zähne ausgebildeten Spreizelemente in das von der Hülse umschlossene Loch hinein deformieren, wodurch eine von der Mantelstärke der Hülse und vom Dübelmaterial abhängige hohe radiale Spreizkraft zustandekommt, durch die die Zähne gegen die Bohrlochwandung gedrückt werden und sich in der Bohrlochwandung festkrallen können.

Die Zähne sind zweckmäßigerweise als Sägezähne ausgebildet, wobei die flache Flanke nach dem Dübelfuß weist und das Einschlagen erleichtert, während die steile Flanke, die die Verankerung im Bohrloch bewirkt, nach dem Dübelkopf hinweist.

Es ist zwar durch die deutsche Gebrauchsmusterschrift 91 10 499 bereits ein Dübel bekannt, bei welchem keilartige Zähne am Schaftumfang angeformt sind. Hier handelt es sich jedoch um einen mittels eines stabartigen Spreizelementes spreizbaren Dübel, bei dem die keilartigen Zähne lediglich an ihrem Vorderrand an der Schafthülse angeformt sind und über dieses Gelenk in das Innere der Hülse einschwenkbar sind.

Gemäß der vorliegenden Erfindung sind die Zähne jedoch über ihre gesamte axiale Länge an der Schafthülse angeformt und beim Einschlagen in ein enges Bohrloch werden die Zähne zusammen mit dem entsprechenden Hülsenabschnitt deformiert, wodurch eine hohe, nach außen gerichtete Spreizkraft zustandekommt.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
- Fig. 1: zeigt eine Seitenansicht eines erfindungsgemäß ausgebildeten Einpreßdübels aus Kunststoff;
- Fig. 2: zeigt einen Schnitt nach der Linie II-II gemäß Fig. 1;
- Fig. 3: zeigt einen in einem Hohlziegel verankerten Einpreßdübel;
- Fig. 4: zeigt einen in einem Vollmauerwerk verankerten Einpreßdübel;
- Fig. 5: eine der Fig. 1 entsprechende Ansicht einer abgewandelten Ausführungsform der Erfindung;
- Fig. 6: eine Teilansicht des Einpreßdübels gemäß Fig. 5 um 90° verdreht;
- Fig. 7: einen Schnitt nach der Linie VII-VII qemäß Fig. 5.

Der erfindungsgemäß ausgebildete Einpreßdübel, der in ein Bohrloch einschlagbar ist und der keine Spreizelemente zur Befestigung benötigt, ist mit dem Bezugszeichen 10 bezeichnet. Er besteht aus einem massiven Schaftabschnitt 12 mit einem Dübelkopf in Gestalt eines Kopfflansches 14 und einer an den massiven Abschnitt 12 anschließenden Hülse 16, die ein zentrales, axiales Loch 18 umschließt, das bis durch den Dübelfuß 20 hindurch verläuft. Der Dübelfuß 20 ist zur Erleichterung des Einschlagens in ein Dübelloch mit einer konischen Spitze versehen.

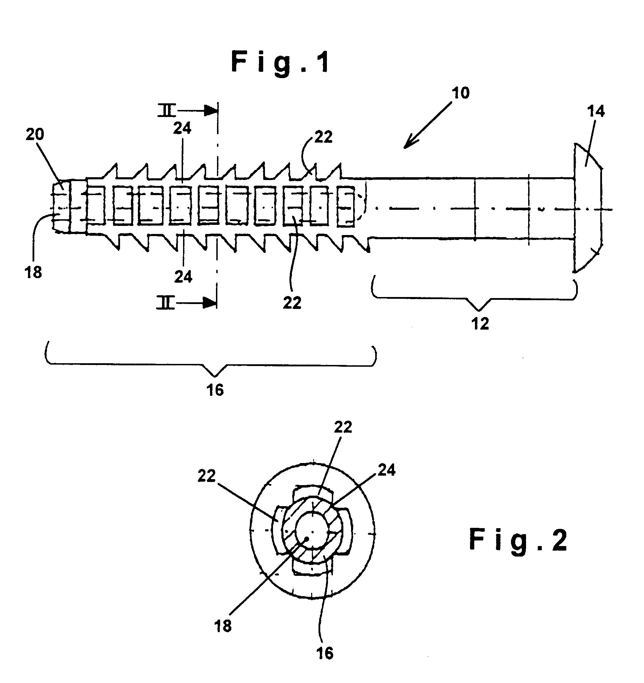

Der als Hülse 16 ausgebildete Schaftabschnitt trägt am äußeren Umfang Zähne 22, die im Querschnitt sägezahnförmig ausgebildet sind und mit ihrer flachen Flanke nach dem Dübelfuß 20 und mit ihrer steilen Flanke nach dem Dübelkopf 14 weisen. Die Zähne sind nach dem Ausführungsbeispiel in vier axial benachbart zueinander verlaufenden Reihen angeordnet, zwischen denen freie Mantelstreifen 24 verbleiben. Die Zähne 22 benachbarter Reihen sind, wie insbesondere aus Fig. 1 erkennbar, axial zueinander um etwa eine halbe Zahnteilung versetzt.

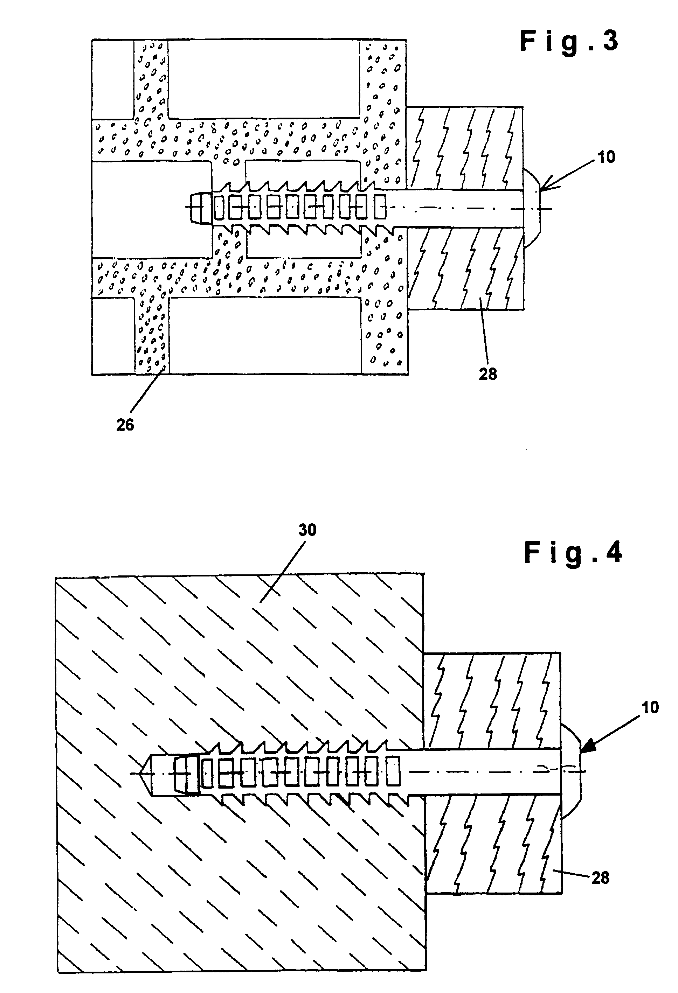

In Fig. 3 ist dargestellt, wie mittels eines erfindungsgemäßen Einpreßdübels ein Befestigungsgegenstand 28 an einem Hohlziegel 26 befestigt ist. Es hat sich gezeigt, daß es für viele Anwendungszwecke ausreicht, wenn der Dübel an nur wenigen Stellen seines Umfangs im Hohlblockstein verankert ist.

Fig. 4 zeigt die Anbringung eines Befestigungsgegenstandes 28 an einem Vollmauerwerk 30.

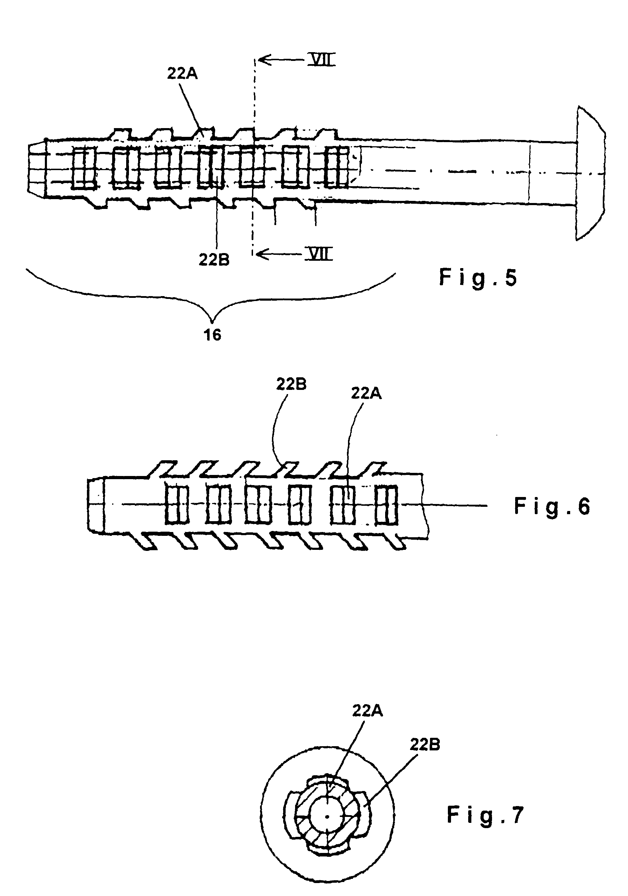

Das Ausführungsbeispiel nach Fig. 5 bis 7 unterscheidet sich von dem Ausführungsbeispiel nach Fig. 1 bis 4 dadurch, daß die Zähne auf der Außenseite der Hülse 16 unterschiedliche Form und Maßhaltigkeit besitzen. So sind die Zähne 22A auf diametral gegenüberliegenden Seiten der Hülse 16 starr ausgebildet, und sie weisen im Längsschnitt, wie aus Fig. 5 ersichtlich, eine Trapezgestalt mit nach dem Dübelfuß abfallender Flanke auf. Dagegen sind die auf der Hülse um 90° versetzt zu den Zähnen 22A angeordneten Zähne 22B als dünnwandige Fahnen ausgebildet, die elastisch zurückweichen können und sich dem Dübelmantel anlegen. Wie insbesondere aus Fig. 6 ersichtlich, sind die Zähne 22B im Längsschnitt etwa parallelogrammartig ausgebildet, mit schräg nach dem Dübelfuß hin abfallenden Flanken. Die Breite der Zähne entspricht etwa der Hälfte der Höhe, während bei den Zähnen 22A die axiale Länge der Zähne etwa doppelt so groß ist wie ihre Höhe.

Der Dübelkopf kann bei dieser Ausführungsform, aber auch bei der Ausführungsform nach Fig. 1 bis 4, verschiedene Formen aufweisen. So kann er mit einem äußeren Anschlußgewinde versehen sein oder der Kopf kann als Zierkopf ausgebildet werden.

### Bezugszeichenliste

- 10: Einpreßdübel
- 12: massiver Schaftabschnitt
- 14: Kopfflansch
- 16: Hülse
- 18: zentrales Loch
- 20: Dübelfuß
- 22: Zähne.
- 24: Mantelstreifen
- 26: Hohlziegel
- 28: Befestigungsgegenstand
- 30: Vollmauerwerk

## Patentansprüche

1. Einpreßdübel (10) aus Kunststoff, der einen massiven, vom Dübelkopf (14) ausgehenden Schaftabschnitt (12) aufweist und der in ein gebohrtes Loch einschlagbar ist und wenigstens über einen Teil (16) seines Schaftes am Umfang mit elastisch ausweichenden Spreizelementen (22) versehen ist, die sich ohne Einführen eines zentralen Spreizelementes der Bohrlochwandung anlegen und die Auszugskraft erhöhen,
dadurch gekennzeichnet, daß der Dübelschaft in einem vom Dübelfuß (20) nach dem massiven Schaftabschnitt (12) verlaufenden Verankerungsabschnitt als Hülse (16) ausgebildet ist, die am Umfang keilförmige Zähne (22) als Spreizelemente trägt.

2. Einpreßdübel nach Anspruch 1,
dadurch gekennzeichnet, daß die an der Hülse (16) ansetzenden Zähne (22) eine flache, nach dem Dübelfuß (20) weisende Flanke und eine steile, nach dem Dübelkopf (14) weisende Flanke aufweisen.

3. Einpreßdübel nach den Ansprüchen 1 und 2,
dadurch gekennzeichnet, daß die an der Hülse (16) ansetzenden Zähne (22) in mehreren, umfangsmäßig benachbart zueinander axial verlaufenden Reihen im Abstand zueinander angeordnet sind.

4. Einpreßdübel nach einem der Ansprüche 1 - 3,
dadurch gekennzeichnet, daß die an der Hülse (16) ansetzenden Zähne (22) benachbarter Reihen axial versetzt zueinander angeordnet sind.

5. Einpreßdübel nach einem der Ansprüche 1 - 4,
dadurch gekennzeichnet, daß die an der Hülse (16) ansetzenden Zähne (22) in vier Reihen umfangsmäßig über die Hülsen (16) verteilt sind.

6. Einpreßdübel nach einem der Ansprüche 1 - 5,
dadurch gekennzeichnet, daß sich die Zähne jeweils nur über einen Sektor des Umfangs erstrecken und zwischen umfangsmäßig benachbarten Zähnen (22) freie Hülsenmantelstreifen (24) verbleiben.

7. Einpreßdübel nach Anspruch 1,
dadurch gekennzeichnet, daß der Dübelkopf als Flansch (14) ausgebildet ist.

8. Einpreßdübel nach einem der Ansprüche 1 - 7,
dadurch gekennzeichnet, daß die umfangsmäßig benachbarten Zähne (22A, 22B) unterschiedliche Höhe, unterschiedliche Form und unterschiedliche Maßhaltigkeit aufweisen.

9. Einpreßdübel nach Anspruch 8,
dadurch gekennzeichnet, daß die diametral auf der Hülse (16) gegenüberliegenden Zähne (22A) starr und im Längsschnitt trapezförmig ausgebildet sind.

10. Einpreßdübel nach Anspruch 8,
dadurch gekennzeichnet, daß die Zähne (22B) im Längsschnitt parallelogrammförmig ausgebildet und elastisch nach dem Hülsenmantel hin deformierbar sind.

## Claims

1. Press-fit dowel (10) made of plastic, which has a shank section (12) emerging from the dowel head (14) and which is adapted to be driven into a drilled hole and at least over part (16) of its shank is provided at the circumference with elastically yielding expansion elements (22) which without the introduction of a central expansion element rest against the wall of the drilled hole and increase the pull-out force,
characterised in that in an anchoring section which runs from the dowel foot (20) as far as the solid shank section (12) the dowel shank is constructed as a bush (16) which on its circumference carries wedge-shaped teeth (22) as expansion elements.

2. Press-fit dowel according to claim 1,
characterised in that the teeth (22) joined to the bush (16) have a flat side which points towards the dowel foot (20) and a steep side which points towards the dowel head (14).

3. Press-fit dowel according to claims 1 and 2, characterised in that the teeth (22) joined to the bush (16) are spaced apart from one another in a plurality of axially extending rows neighbouring one another circumferentially.

4. Press-fit dowel according to any of claims 1 to 3, characterised in that the teeth (22) joined to the bush (16) that are in neighbouring rows are axially offset relative to one another.

5. Press-fit dowel according to any of claims 1 to 4, characterised in that the teeth (22) joined to the bush (16) are distributed circumferentially over the bushes (16) in four rows.

6. Press-fit dowel according to any of claims 1 to 5, characterised in that the teeth respectively only extend over one sector of the circumference and leave free convex bush surface strips (24) between circumferentially neighbouring teeth (22).

7. Press-fit dowel according to claim 1, characterised in that the dowel head is in the form of a flange (14).

8. Press-fit dowel according to any of claims 1 to 7, characterised in that the circumferentially neighbouring teeth (22A, 22B) are of different heights, different shapes and have different dimensional stabilities.

9. Press-fit dowel according to claim 8, characterised in that the diametrically opposed teeth (22A) on the bush (16) are rigid and in longitudinal section they are trapezium-shaped.

10. Press-fit dowel according to claim 8, characterised in that in longitudinal section the teeth (22A) are parallelogram-shaped and are adapted to be elastically deformed towards the convex surface of the bush.

## Revendications

1. Cheville (10) en matière plastique, qui présente une tête (14) et une section de fût (12) massive, qui peut être enfoncée par frappe dans un trou foré et qui est munie, sur une partie au moins de son fût, sur le pourtour, d'éléments d'accrochage (22) susceptibles de céder élastiquement, qui s'appliquent contre la paroi du trou foré sans enfoncement d'un élément d'expansion central, pour accroître la force d'arrachement, caractérisée par le fait que le fût de la cheville comprend, entre la section de fût (12) massive et l'extrémité distale (20) de la cheville, une section d'ancrage en forme de douille (16) portant sur le pourtour des dents (22) en forme de coin, en tant qu'éléments d'accrochage.

2. Cheville suivant la revendication 1, caractérisée par le fait que les dents (22) sur la douille (16) présentent un flanc plat tourné vers l'extrémité distale (20) de la cheville et un flanc raide tourné vers la tête (14) de la cheville.

3. Cheville suivant les revendications 1 et 2, caractérisée par le fait que les dents (22) formées sur la douille (16) sont disposées en plusieurs rangées axiales espacées les unes par rapport aux autres dans la direction circonférentielle.

4. Cheville suivant l'une des revendications 1-3, caractérisée par le fait que les dents (22) formées sur la douille (16) sont décalées axialement entre les rangées voisines.

5. Cheville suivant l'une des revendications 1-4, caractérisée par le fait que les dents (22) formées sur la douille (16) sont réparties sur la douille (16) en quatre rangées.

6. Cheville suivant l'une des revendications 1-5, caractérisée par le fait que les dents ne s'étendent chacune que sur un secteur de la circonférence et que des bandes (24) exemptes de dents subsistent entre des dents (22) voisines dans la direction circonférentielle.

7. Cheville suivant la revendication 1, caractérisée par le fait que la tête de cheville est conformée en bride (14).

8. Cheville suivant l'une des revendications 1-7, caractérisée par le fait que les dents (22A, 22B) voisines dans la direction circonférentielle présentent des hauteurs différentes, des formes différentes et des aptitudes différentes à la déformation.

9. Cheville suivant la revendication 8, caractérisée par le fait que les dents (22A) diamétralement opposées sur la douille (16) sont rigides et sont de profil trapézoïdal en coupe longitudinale.

10. Cheville suivant la revendication 8, caractérisée par le fait que les dents (22B) présentent un profil en parallélogramme en coupe longitudinale et sont déformables élastiquement en direction de l'enveloppe de la douille.
